# EUROPÄISCHE PATENTANMELDUNG

(11) **EP 3 739 238 A1**
(43) Veröffentlichungstag der Anmeldung: **18.11.2020**
(21) Anmeldenummer: 20174037.0
(22) Anmeldetag: 12.05.2020
(51) Int. Cl.: F16H 3/00, F16H 37/04, F16H 57/033

(54) **LASTSCHALTGETRIEBE FÜR LANDMASCHINEN**

(30) Priorität: 14.05.2019 DE 102019206979
(71) Anmelder: Deere & Company, Moline, IL 61265 (US)
(72) Erfinder: RAISCH, Stefan, 68163 Mannheim (DE)
(74) Vertreter: Dehnhardt, Florian Christopher

(57) **Zusammenfassung**

Die Erfindung betrifft ein Lastschaltgetriebe für eine Landmaschine mit einem Getriebegehäuse, einer Eingangswelleneinheit (41) und einer Ausgangswelle (61), wobei sich die Eingangswelleneinheit (41) und die Ausgangswelle (61) zumindest abschnittsweise innerhalb des Gehäuses erstrecken, wobei eine Nebenwelle (51) parallel versetzt zwischen der Eingangswelleneinheit (41) und der Ausgangswelle (61) innerhalb des Gehäuses angeordnet ist, wobei die Eingangswelleneinheit (41) und die Nebenwelle (51) über eine Vorschaltgruppe (50) und die Nebenwelle (51) und die Ausgangswelle (61) über eine Nachschaltgruppe (60) miteinander in Verbindung stehen, wobei jede Schaltgruppe (50,60) einzeln zu- oder abkoppelbare Zahnradpaare aufweist, und wobei die Eingangswelleneinheit (41) eine Außenwelle (42) und eine koaxial in der Außenwelle (42) angeordnete und gegenüber der Außenwelle (42) verdrehbare Innenwelle (43) aufweist und die Innenwelle (43) und die Außenwelle (42) über ein Vorgelege (40) miteinander in Verbindung stehen.

## Beschreibung

Die vorliegende Erfindung betrifft ein Lastschaltgetriebe für Landmaschinen.

Bei Lastschaltgetrieben handelt es sich um eine spezielle Form von Fahrzeuggetrieben, bei denen eine Übersetzung unter Last, also während der Fahrt, ohne Unterbrechung des Drehmoments geändert werden kann. Dadurch können auch während des Schaltvorgangs Vortriebskräfte übertragen werden, sodass das Fahrzeug auch während des Schaltvorgangs weiter beschleunigen kann. Somit ergeben sich beim Schaltvorgang keine Komforteinbußen. Bei landwirtschaftlichen Nutzfahrzeugen, insbesondere bei Traktoren, werden vorwiegend Lastschaltgetriebe eingesetzt, weil sie insbesondere bei der Arbeit in hügeligem Gelände und auf wechselnden Bodenarten eine schnellere Arbeit ermöglichen und helfen, Kraftstoff zu sparen. Manche Traktorgetriebe sind auch nur teillastschaltbar, das bedeutet, dass nur zwischen manchen Gängen ohne Zugkraftunterbrechung geschaltet werden kann, während andere (zum Beispiel Gruppenwechsel) mit einer Zugkraftunterbrechung verbunden sind.

Es ist bekannt, derartige Getriebe in Verbindung mit Planetengetrieben und Kupplungen in einem Baukastensystem auszubilden, sodass das Lastschaltgetriebe, durch entsprechende Ausbildung und Anordnung von Zahnradpaarungen des Planetengetriebes in verschiedenen Betriebsmodi, wie Durchtriebsmodus, Untersetzungsmodus und Reversiermodus betrieben werden können. So werden an Traktoren Lastschaltgetriebe als Getriebevorstufe eingesetzt, die je nach Ausbildung eines Stufenplanetensatzes entweder in den Betriebsmodi Durchtriebsmodus bzw. Reversiermodus oder in den Betriebsmodi Durchtriebsmodus bzw. Untersetzungsmodus betrieben werden können.

Diese Getriebe zeichnen sich dadurch aus, dass in einer ersten Schaltung eine mit einer Eingangswelle verbundene Kupplung die Eingangswelle mit der Ausgangswelle verbindet, sodass das Getriebe im Durchtriebsmodus betrieben werden kann, wobei das Planetengetriebe freiläuft. In einer zweiten Schaltung wird die Kupplung gelöst, sodass der Planetenträger durch die Eingangswelle angetrieben wird und sich der Planetensatz um ein durch eine Bremse festgestelltes erstes Sonnenrad wälzt, durch welches sich die Ausgangswelle erstreckt. Der Abtrieb erfolgt über ein zweites mit der Ausgangswelle verbundenes Sonnenrad, welches von dem Planetensatz angetrieben wird. Je nach Zuordnung des Planetensatzes bzw. Ausbildung der Zahnradsätze von Planetensatz und Sonnenrädern kann das Lastschaltgetriebe im Untersetzungsmodus oder im Reversiermodus betrieben werden.

Somit wird ein zweistufiges Lastschaltgetriebe bereitgestellt, welches jedoch zum einen fertigungstechnisch aufwendig ausgebildet ist, und zum anderen einen weiteren Betriebsmodus, beispielsweise ein Kriechgangmodus, in der genannten Anordnung nicht zulässt.

In der EP 0 745 198 B1 wird ein Lastschaltgetriebe für mobile Arbeitsmaschinen beschrieben, sowie ein Verfahren zur Steuerung dieses Lastschaltgetriebes. Dabei kommen Hydromotoren zum Einsatz, die über eine Kupplung miteinander verbunden sind. In einem unteren Geschwindigkeitsbereich werden die Hydromotoren drehmomentaddierend zusammengeschaltet. Einer der Hydromotoren wird über eine weitere Kupplung umgestaltet, sodass die Hydromotoren in einer oberen Geschwindigkeitsbereichsdrehzahl addierend betrieben werden können.

In der WO 2013/064371 A1 wird ein Lastschaltgetriebe mit einer Ausgangswelle und einer dazu koaxial angeordneten Ausgangswelle beschrieben. Das Lastschaltgetriebe weist einen Planetengetriebesatz auf. Das Planetengetriebe umfasst einen Planetenträger, der mit der Eingangswelle in Verbindung steht. Mit einem Schaltelement ist die erste Ausgangswelle mit der ausgangsseitigen Sonne eines Stufenplanetensatzes verbindbar. Mit einem zweiten Schaltelement ist die erste Ausgangswelle direkt mit der Eingangswelle verbindbar. Das eingangsseitige Sonnenrad des Stufenplanetensatzes ist drehfest mit einem Gehäuseteil des Lastschaltgetriebes verbunden.

Ausgehend von diesem Stand der Technik, liegt der Erfindung die Aufgabe zugrunde, ein Lastschaltgetriebe anzugeben, dass einerseits mit einer hohen Anzahl von Gang-Varianten bei zugleich kompakter Größe realisierbar ist und dass andererseits für einen breiten Einsatzbereich verwendbar ist.

Diese Aufgabe wird gelöst durch ein Lastschaltgetriebe gemäß dem unabhängigen Anspruch.

Erfindungsgemäß weist das Lastschaltgetriebe ein Getriebegehäuse, eine Eingangswelleneinheit und eine Ausgangswelle auf, wobei sich die Eingangswelleneinheit und die Ausgangswelle zumindest abschnittsweise innerhalb des Gehäuses erstrecken, wobei eine Nebenwelle parallel versetzt zwischen der Eingangswelleneinheit und der Ausgangswelle innerhalb des Gehäuses angeordnet ist, wobei die Eingangswelleneinheit und die Nebenwelle über eine Vorschaltgruppe und die Nebenwelle und die Ausgangswelle über eine Nachschaltgruppe miteinander in Verbindung stehen, wobei jede Schaltgruppe einzeln zu-oder abkoppelbare Zahnradpaare aufweist, und wobei die Eingangswelleneinheit eine Außenwelle und eine koaxial an der Außenwelle angeordnete und gegenüber der Außenwelle verdrehbare Innenwelle aufweist, und die Innenwelle und die Außenwelle über ein Vorgelege miteinander in Verbindung stehen.

Mit Zu- bzw. Abkoppeln der einzelnen Zahnradpaare ist im Rahmen dieser Erfindung gemeint, dass die Zahnradpaare entweder miteinander in Eingriff stehen und demnach ein Drehmoment von dem einen Zahnrad auf das andere Zahnrad des Zahnradpaares übertragen werden kann oder dass diese Zahnräder eines Zahnradpaares nicht miteinander in Eingriff stehen. Bei zwei miteinander in Eingriff stehenden Zahnrädern handelt es sich folglich um ein zugekoppeltes Zahnradpaar.

Über die Innenwelle der Eingangswelleneinheit kann das Lastschaltgetriebe mit einer Antriebsmaschine, z. B. einem Verbrennungsmotor verbunden werden, sodass das eingespeiste Drehmoment über das Lastschaltgetriebe auf die Ausgangswelle übertragen werden kann. An der Ausgangswelle kann dann eine Arbeitsmaschine oder eine Antriebswelle, z. B. für Räder angeschlossen werden.

Insgesamt weist das Lastschaltgetriebe zwei Schaltgruppen, sowie ein Vorgelege auf. Bei einem Vorgelege handelt es sich um eine Erweiterung des Schaltgetriebes, das in der Regel zumindest zwei Schaltzustände aufweist, wobei ein Schaltzustand für einen niedrigen und ein anderer Schaltzustand für einen hohen Lastzustand vorgesehen ist. Aus diesem Grunde werden die Schaltzustände des Vorgeleges in der Regel mit "Hi" für den hohen Lastzustand und mit "Lo" für den niedrigen Lastzustand bezeichnet. Durch ein solches Vorgelege können bei zwei Schaltzuständen die insgesamt durch die Vorschaltgruppe und die Nahschaltgruppe zur Verfügung stehenden Gangschaltvarianten verdoppelt werden.

Üblicherweise wird ein solches Vorgelege stets zwischen zwei nebeneinander oder übereinanderstehenden Wellen realisiert, wodurch ein entsprechend großer Bauraum des Getriebes zur Verfügung stehen muss, um diese beiden über das Vorgelege miteinander in Verbindung stehenden Wellen anordnen zu können. Die Erfindung geht jedoch von der Erkenntnis aus, dass eine kompaktere Bauform erreicht werden kann, wenn die Eingangswelle in Form einer Eingangswelleneinheit mit zwei koaxial zueinander angeordneten Wellen in Form einer Innenwelle und einer Außenwelle ausgebildet ist, wobei dann das Vorgelege die Innenwelle mit der Außenwelle verbindet. Dementsprechend erfolgt eine Drehmomentübertragung zwischen der Innen- und der Außenwelle, wodurch sich unterschiedliche Umfangsgeschwindigkeiten zwischen der Innen- und der Außenwelle ausbilden können.

Gemäß einer ersten Ausgestaltungsform der Erfindung weist das Vorgelege zumindest eine Planetengetriebestufe mit zumindest einem Sonnenrad, einem Hohlrad, sowie einer Planetengruppe bestehend aus zumindest einem ersten und zumindest einem zweiten Planetenrad auf. Hierbei ist das erste Planetenrad zwischen dem Sonnenrad und dem zweiten Planetenrad und das zweite Planetenrad zwischen dem ersten Planetenrad und dem Hohlrad angeordnet. Somit steht das Sonnenrad über das erste Planetenrad und das zweite Planetenrad mit dem Hohlrad in Verbindung. Üblicherweise ist bei einer Planetengruppe aber nicht nur jeweils ein Planetenrad entlang des Umfangs vorgesehen. Vielmehr erfolgt eine Abstützung des Hohlrades auf dem Sonnenrad über zumindest drei entlang des Umfangs angeordnete Planetenräder. Bei einer solchen Ausbildung lägen dann sowohl drei erste Planetenräder als auch drei zweite Planetenräder vor. Letztendlich ist die Erfindung auf eine solche Ausbildung aber nicht beschränkt.

Sofern das Vorgelege eine solche Planetengetriebestufe aufweist, ist das Sonnenrad unmittelbar an die Innenwelle der Eingangswelleneinheit gekoppelt.

Bevorzugt erfolgt eine Koppelung der Planetengruppe mit der Außenwelle der Eingangswelleneinheit. Das besondere bei einer Planetengetriebestufe ist, dass ausgehend von einem Sonnenrad, einer Planetengruppe und einem Hohlrad jeweils zwei dieser Komponenten unabhängig voneinander betrieben werden können. Im vorliegenden Fall ist das Hohlrad sowohl im ersten als auch im zweiten Schaltzustand nicht fixiert und demnach ausgehend von der Bewegung des Sonnenrades und der Planetengruppe drehbeweglich. Die Art und Weise der Drehung ergibt sich hierbei aus der Rotation des Sonnenrades und der Rotation der Planetengruppe.

Um zwei Schaltzustände realisieren zu können, ist in einem ersten Schaltzustand die Planetengruppe unmittelbar mit der Innenwelle gekoppelt. Somit weisen sowohl das Sonnenrad als auch die Planetengruppe die gleiche Rotationsgeschwindigkeit auf, sodass sich dementsprechend zwischen der Planetengruppe und dem Sonnenrad keine Relativbewegung ausbildet. Da bevorzugt auch die Außenwelle unmittelbar mit der Planetengruppe gekoppelt ist, wird die Rotationsgeschwindigkeit der Innenwelle direkt auf die Außenwelle übertragen. Somit erfolgt in einem ersten Schaltzustand des Vorgeleges weder eine Übersetzung noch eine Untersetzung.

In einem zweiten Schaltzustand ist dann die Planetengruppe der Planetengetriebestufe über zumindest ein Vorgelegezahnradpaar mit der Innenwelle der Eingangswelleneinheit gekoppelt. Dieses Vorgelegezahnradpaar kann hierbei entweder eine Über- oder eine Untersetzung herbeiführen, sodass dementsprechend die Planetengruppe gegenüber dem Sonnenrad eine entweder geringere oder eine höhere Rotationsgeschwindigkeit aufweist. Folglich bildet sich zwischen dem Sonnenrad und der Planetengruppe eine Relativgeschwindigkeit aus, wobei aber die Drehrichtung von Sonnenrad und Planetengruppe dieselbe ist.

Die einzelnen Schaltzustände werden über jeweils eine Kupplung realisiert, wobei vorzugsweise Lamellenkupplungen Anwendung finden. Um eine Unter- bzw. Übersetzung durch das Vorgelegezahnradpaar in dem zweiten Schaltzustand herbeizuführen, ist zumindest eine Zusatzwelle vorgesehen, wobei das Antriebszahnrad des zumindest einen Vorgelegezahnradpaares auf der Innenwelle und das Abtriebszahnrad auf der Zusatzwelle angeordnet ist. Bevorzugt erfolgt jedoch eine doppelte Unter- bzw. Übersetzung, wobei ein zweites Antriebszahnrad auf der Zusatzwelle angeordnet ist und ein entsprechendes zweites Abtriebszahnrad auf einem Außenwellenabschnitt des Vorgeleges angeordnet ist, wobei der Außenwellenabschnitt koaxial zur Innenwelle angeordnet und entsprechend über eine Kupplung mit der Planetengruppe verbunden ist.

Über die Planetengetriebestufe lässt sich auch in einer einfachen Art und Weise die Drehrichtung der Ausgangswelle umkehren. Dies erfolgt über eine Umkehrung der Rotationsrichtung der Außenwelle. Hierzu wird das Hohlrad gegenüber einer Drehung fixiert, während das Sonnenrad weiterhin unmittelbar über die Innenwelle angetrieben wird. Im Gegensatz zu dem ersten und dem zweiten Schaltzustand wird nunmehr in einem dritten Schaltzustand nur das Hohlrad fixiert, die Planetengruppe allerdings gegenüber der Innenwelle entkoppelt. Bei einem feststehenden Hohlrad und bei einem rotierenden Sonnenrad vollführt die Planetengruppe eine gegenüber dem Sonnenrad gegenläufige Rotation. Somit weist die Rotation der Außenwelle gegenüber dem ersten und dem zweiten Schaltzustand eine entgegengesetzte Richtung auf.

Anstelle einer Planetengetriebestufe kann die Innenwelle auch über ein klassisch ausgebildetes Vorgelege mit zwei Vorgelegezahnradpaaren mit der Außenwelle gekoppelt werden. Hierbei handelt es sich um eine zweite Ausgestaltungsform der Erfindung. Dementsprechend weist das Vorgelege zumindest ein erstes und ein zweites Vorgelegezahnradpaar auf, wobei in einem ersten Schaltzustand die Innenwelle der Eingangseinheit unmittelbar und/oder in einem zweiten Schaltzustand über das erste und das zweite Vorgelegezahnradpaar mit der Außenwelle der Eingangseinheit in Verbindung steht. Der wesentliche Unterschied gegenüber der ersten Ausgestaltungsform ist hierbei jedoch, dass eine Umkehrung der Drehrichtung der Außenwelle nicht in einfacher Art und Weise über eine Fixierung eines Hohlrades der Planetengetriebestufe erfolgen kann. Vielmehr wird die Drehrichtung der Ausgangswelle nunmehr derart umgekehrt, dass in einem dritten Schaltzustand des Vorgeleges die Innenwelle der Eingangswelleneinheit mit der Außenwelle der Eingangswelleneinheit über drei in Serie miteinander in Verbindung stehende Zahnräder gekoppelt ist. Durch die Einbindung eines dritten Zahnrades wird nunmehr gegenüber einem einfachen Zahnradpaar eine Umkehrung der Drehrichtung erreicht.

Unabhängig von der konkreten Ausgestaltung des Vorgeleges werden weitere Schaltzustände über eine Vorschaltgruppe und eine Nachschaltgruppe ermöglicht, wobei Antriebszahnräder der Vorschaltgruppe auf der Außenwelle der Eingangswelleneinheit und Abtriebszahnräder der Vorschaltgruppe auf der Nebenwelle angeordnet sind. Die Antriebszahnräder der Nachschaltgruppe sind bevorzugt auf der Nebenwelle und die Abtriebszahnräder der Nachschaltgruppe auf der Ausgangswelle angeordnet.

Darüber hinaus kann das Lastschaltgetriebe auch über eine Stufe verfügen, bei dem die Vorschaltgruppe überbrückt wird. Überbrückt meint in diesem Zusammenhang jedoch nicht, dass die Nebenwelle in diesem Schaltzustand keine Beachtung findet. Vielmehr dient die Nebenwelle als Träger für ein Zwischenzahnrad. Das Antriebszahnrad der Eingangswelleneinheit ist hierbei wie auch die anderen Antriebszahnräder der Vorschaltgruppe auf der Außenwelle und das Abtriebszahnrad auf der Ausgangswelle angeordnet. Zwischen dem Antriebszahnrad und dem Abtriebszahnrad ist dann das Zwischenzahnrad auf der Nebenwelle angeordet, sodass eine Drehmomentübertragung von dem Antriebszahnrad über das Zwischenzahnrad auf das Abtriebszahnrad erfolgt. Gegenüber der klassischen Aufteilung zwischen Vorschaltgruppe und Nachschaltgruppe ergibt sich die Besonderheit, dass das Drehmoment unmittelbar über das Zwischenzahnrad übertragen wird. Das zusätzliche Einkoppeln eines Zahnrades der Nachschaltgruppe ist demnach nicht erforderlich, um eine Rotation der Ausgangswelle herbeizuführen.

Wie bereits zuvor erläutert, kann über die Ausgestaltung der Eingangswelleneinheit mit einer Innenwelle und einer Außenwelle eine besonders kompakte Bauform des Lastschaltgetriebes erreicht werden. Eine solche Ausbildung ist aber nicht nur auf die Eingangswelleneinheit beschränkt. Vielmehr können auch die Nebenwelle und die Ausgangswelle als Nebenwelleneinheit und Ausgangswelleneinheit ausgebildet sein und dementsprechend jeweils über eine Innenwelle und eine koaxial und drehbar dazu gelagerte Außenwelle verfügen.

Eine solche Ausbildung hat den Vorteil, dass auch für die Nebenwelleneinheit und die Ausgangswelleneinheit unterschiedliche Rotationsgeschwindigkeiten zwischen der Innenwelle und der Außenwelle erzeugt werden können, wobei dann unterschiedliche Schaltzustände der Vorschalt- und der Nachschaltgruppe darüber realisiert werden, dass unterschieden wird, ob die entsprechende Außen- oder Innenwelle von dem entsprechenden Abtriebszahnrad angetrieben wird.

Unabhängig von der konkreten Ausgestaltung werden die Zahnradpaare der Vor- und der Nachschaltgruppe bevorzugt jeweils über eine separate zugeordnete Kupplung zu- oder abgekoppelt, wobei die Kupplungen vorzugsweise Lamellenkupplungen sind.

Wenngleich das Lastschaltgetriebe in seiner Kernfunktion dafür ausgelegt ist, ein Drehmoment von der Eingangswelleneinheit auf die Ausgangswelle zu übertragen, so können sowohl an der Eingangswelle als auch an der Ausgangswelle oder auch an Zusatzwellen Arbeitsmaschinen, wie z. B. Pumpen, angeschlossen werden, sodass eine Vielzahl von unterschiedlichen Maschinen bei unterschiedlichen Drehzahlen und Lastzuständen betrieben werden können.

Im Folgenden wird die Erfindung anhand von lediglich Ausführungsbeispielen zeigenden Figuren beschrieben. Es zeigen:
- Figur 1: eine schematische Darstellung einer landwirtschaftlichen Arbeitsmaschine,
- Figur 2: ein erfindungsgemäßes Lastschaltgetriebe mit einer Planetengetriebestufe im Vorgelege,
- Figur 3: eine alternative Ausgestaltung des Lastschaltgetriebes gemäß Fig. 2,
- Figur 4: eine weitere alternative Ausgestaltung des Lastschaltgetriebes gemäß Fig. 2,
- Figur 5: ein alternatives erfindungsgemäßes Lastschaltgetriebe mit einem über Zahn-radpaare realisiertem Vorgelege.

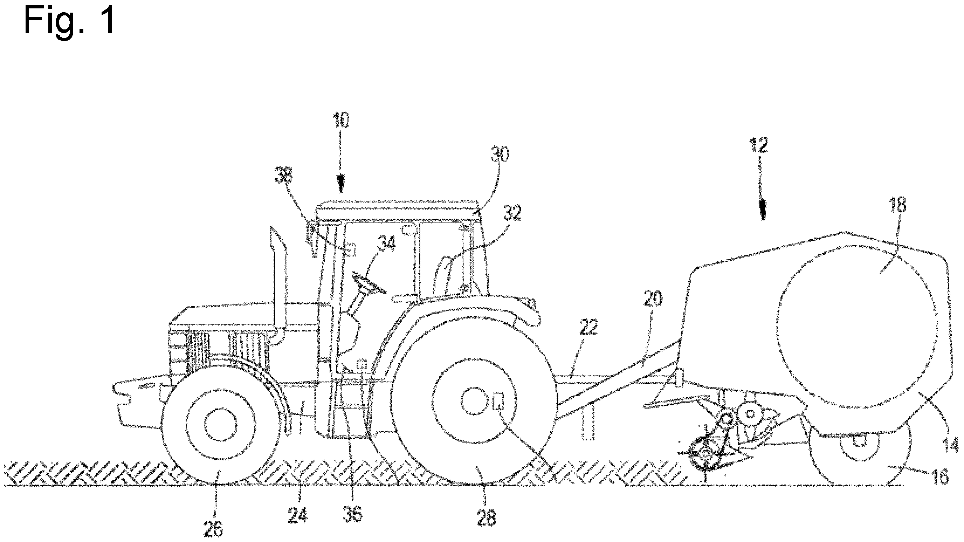

Figur 1 zeigt eine landwirtschaftliche Arbeitsmaschine in Form eines Traktors 10 und eines vom Traktor gezogenen beliebigen Gerätes 12, das im Ausführungsbeispiel rein exemplarisch als Rundballenpresse ausgeführt ist. Das Gerät 12 umfasst ein auf Rädern 16 abgestütztes Fahrgestell 14 mit einer Ballenbildungskammer 18. Das Gerät 12 wird über eine Deichsel 20 vom Traktor 10 gezogen. Ihre antreibbaren Elemente werden mittels einer Zapfwelle 22 vom Traktor 10 angetrieben.

Der Traktor 10 umfasst ein Fahrgestell 24, das sich auf vorderen, lenkbaren Rädern 26 und rückwärtig angetriebenen Rädern 28 abstützt. Ein Bedienerarbeitsplatz mit einem Sitz 32 befindet sich in einer Kabine 30. Vom Sitz aus sind ein Lenkrad 34, ein Gaspedal 36 und eine Bedienerstelle 38 betätigbar.

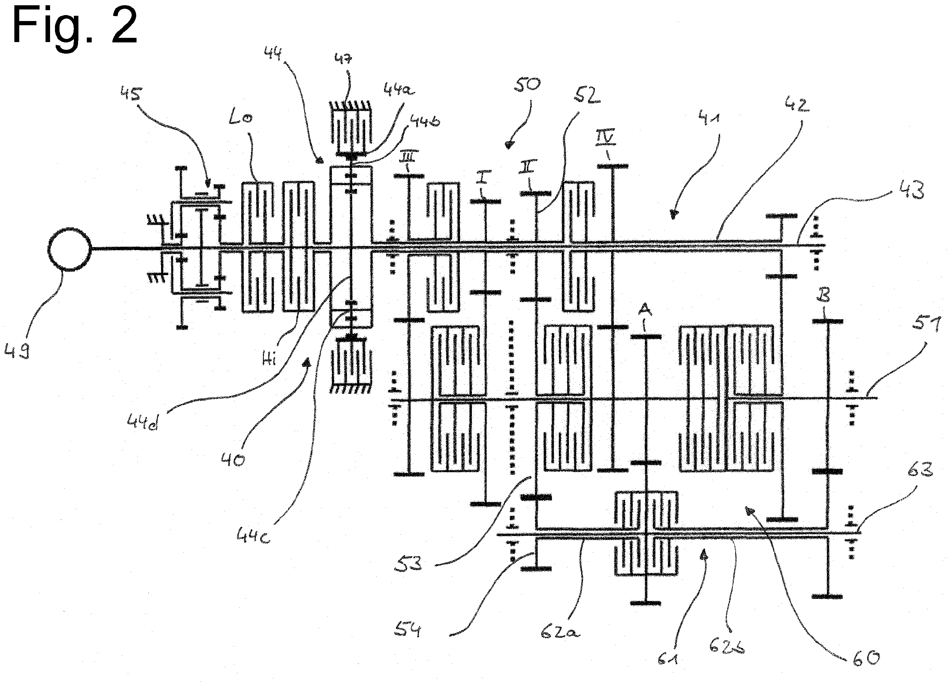

Die Figur 2 zeigt ein schematisches Schaubild des erfindungsgemäßen Lastschaltgetriebes. Das Lastschaltgetriebe weist eine Eingangswelleneinheit 41 bestehend aus einer Außenwelle 42 und einer koaxial in der Außenwelle 42 angeordneten und gegenüber der Außenwelle 42 vertretbaren Innenwelle 43 auf. Darüber hinaus verfügt das Lastschaltgetriebe über eine Ausgangswelle 61, sowie eine parallel zur Eingangswelleneinheit 41 und zur Ausgangswelle 61 versetzte Nebenwelle 51.

Die Innenwelle 43 der Eingangswelleneinheit 41 ist unmittelbar an eine Antriebsmaschine 49 gekoppelt, wobei die Drehmomentübertragung von der Antriebsmaschine 49 auf die Ausgangswelle 61 über ein Vorgelege 40, eine Vorschaltgruppe 50 und eine Nachschaltgruppe 60 erfolgt.

Hierbei ist das Vorgelege 40 zwischen der Innenwelle 43 und der Außenwelle 42 vorgesehen, wobei mittels des Vorgeleges 40 unterschiedliche Übersetzungs- bzw. Untersetzungsverhältnisse zwischen Innenwelle 43 und Außenwelle 42 realisierbar sind. Dies hat zur Folge, dass sich grundsätzlich zwischen der Innenwelle 43 und der Außenwelle 42 unterschiedliche Rotationsgeschwindigkeiten ausbilden können.

Bei der Ausgestaltung gemäß der Figur 2 verfügt das Vorgelege 40 über eine Planetengetriebestufe 44. Diese Planetengetriebestufe 44 setzt sich zusammen aus einem zentralen Sonnenrad 44d, einem ersten Planetenrad 44c, einem zweiten Planetenrad 44b und einem Hohlrad 44a. Das Sonnenrad 44d ist hierbei unmittelbar mit der Innenwelle 43 verbunden. Die Außenwelle 43 ist hingegen mit dem ersten und dem zweiten Planetenrad 44b, 44c verbunden, die eine gemeinsame sogenannte Planetengruppe bilden.

Grundsätzlich weist das Vorgelege 40 zwei Schaltzustände auf, die durch Betätigung der Kupplungen Lo und Hi geschaltet werden können. Die Kupplung Lo betätigt hierbei einen niedrigen Lastzustand und die Kupplung Hi einen hohen Lastzustand. Der wesentliche Unterschied zwischen diesen beiden Schaltzuständen ergibt sich aus der nachfolgenden Betrachtung. Eine Betätigung der Kupplung Hi hat zur Folge, dass die Planetengruppe unmittelbar mit der Innenwelle 43 gekoppelt wird. Folglich weisen sowohl die Innenwelle 43, das Sonnenrad 44d und auch die Planetengruppe bestehend aus den Planetenrädern 44b, 44c dieselbe Rotationsgeschwindigkeit auf. Zwischen dem Sonnenrad 44d und der Planetengruppe besteht somit keine Relativgeschwindigkeit.

Dadurch, dass die Planetengruppe unmittelbar mit der Außenwelle 42 der Eingangswelleneinheit 41 gekoppelt ist, wird somit die Rotationsgeschwindigkeit der Innenwelle 43 unverändert auf die Außenwelle 42 übertragen. Man spricht daher in diesem Zusammenhang auch von einem direkten Schaltzustand.

Im Gegensatz dazu erfolgt bei Betätigung der Kupplung Lo eine Übertragung des Drehmomentes von der Innenwelle 43 über zwei untersetzte Vorgelegezahnradpaare 45 auf die Planetengruppe. Im Gegensatz zum Schaltzustand Hi wird das Drehmoment somit in einer untersetzten Art und Weise auf die Planetengruppe übertragen, wodurch die Rotationsgeschwindigkeit der Planetengruppe und damit auch der Außenwelle 42 von der des Sonnenrades 44d und der Innenwelle 43 abweicht. Trotz dieser Untersetzung weisen jedoch sowohl die Innenwelle 43 als auch die Außenwelle 42 die gleiche Rotationsrichtung auf, da diese durch die Verwendung von zwei Vorgelegezahnradpaaren 45 erhalten bleibt.

Über das Vorgelege 40 ist aber ferner auch eine Reversiereinheit verwirklicht, die über die Kupplung 47 betätigt werden kann. Die Betätigung dieser Kupplung 47 führt dazu, dass das Hohlrad 44a gegenüber einer Drehung fixiert wird. Zugleich wird die Innenwelle 43 weiterhin über die Antriebsmaschine 49 in einer ersten Drehrichtung angetrieben. Dadurch, dass in diesem Zustand die Kupplungen Lo und Hi nicht betätigt sind, ist die Drehung der Planetengruppe allein abhängig von der Rotation des Sonnenrades 44d und des Hohlrades 47. Um die Rotation des Sonnenrades 44d gegenüber einem feststehenden Hohlrad 44a ausgleichen zu können, vollzieht die Planetengruppe eine gegenüber dem Sonnenrad 44d umgekehrte Rotation. Da die Planetengruppe jedoch weiterhin mit der Außenwelle 42 verbunden ist, wird die Rotation der Außenwelle 42 umgekehrt.

Das Lastschaltgetriebe verfügt darüber hinaus über eine Vorschaltgruppe 50, über die das Drehmoment von der Außenwelle 42 der Eingangswelleneinheit 41 auf die Nebenwelle 51 übertragen wird. Hierzu weist die Vorschaltgruppe 50 insgesamt vier Zahnradpaare I, II, III, IV auf, die über jeweils ein Antriebszahnrad auf der Außenwelle 42 und einem Abtriebszahnrad auf der Nebenwelle 51 zusammengesetzt sind.

Zwischen der Nebenwelle 51 und der Ausgangswelle 61 ist wiederum eine Nachschaltgruppe 60 angeordnet, die über insgesamt zwei Zahnradpaare A, B verfügt.

Hierbei ist die Besonderheit, dass auch die Ausgangswelle 61 als Ausgangswelleneinheit bestehend aus einer Ausgangsinnenwelle 63 und einer Ausgangsaußenwelle 62 gebildet ist, wobei die Ausgangsaußenwelle 62 wiederum in zwei Abschnitte 62a, 62b unterteilt ist. Die Abtriebszahnräder der Nachschaltgruppe 60 sind entweder auf der Ausgangsinnenwelle 63 oder dem Abschnitt 62b der Ausgangsaußenwelle 62 angeordnet.

Darüber hinaus kann die Nachschaltgruppe 60 auch dahingehend überbrückt werden, dass das Drehmoment unmittelbar von einem Antriebszahnrad der Vorschaltgruppe 52 auf ein Abtriebszahnrad der Vorschaltgruppe 54 übertragen wird, wobei das Abtriebszahnrad 54 auf dem Abschnitt 62a der Ausgangsaußenwelle 62 angeordnet ist. Um eine solche Übertragung zu gewährleisten, ist in diesem Fall das eigentlich auf der Nebenwelle 51 sitzende Abtriebszahnrad 53 der Vorschaltgruppe 50 als Zwischenzahnrad ausgebildet, über welches das Drehmoment von dem Antriebszahnrad 52 auf das Abtriebszahnrad 54 übertragen wird.

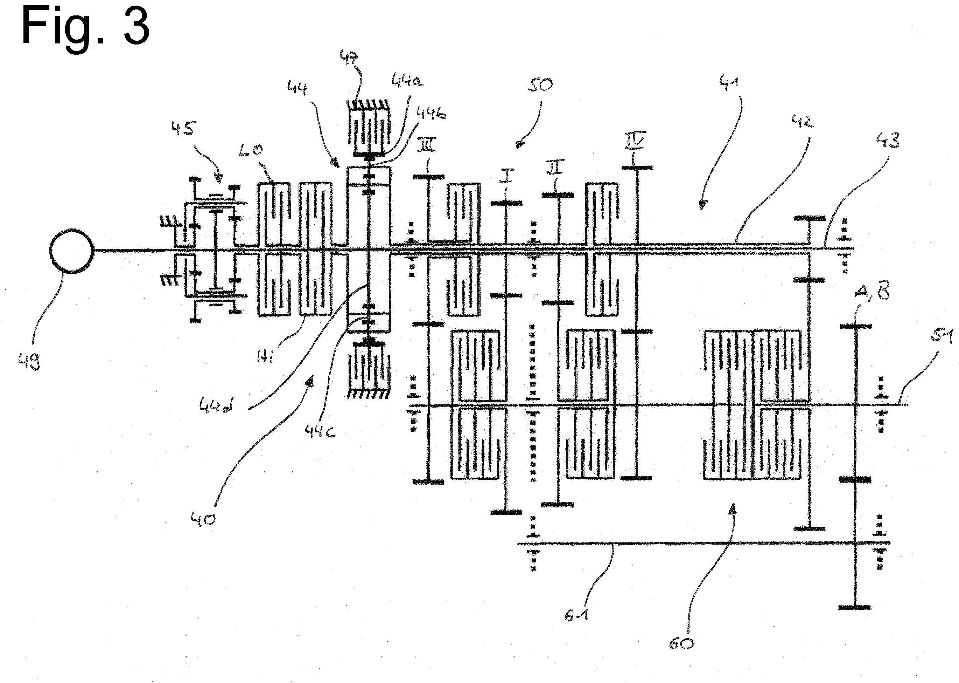

Die Figur 3 zeigt diesbezüglich eine alternative Ausgestaltung, bei der die Nachschaltgruppe 60 über nur ein Zahnradpaar B realisiert ist, wobei die Schaltzustände der Nachschaltgruppe 60 über unterschiedliche Einkopplungen der Nebenwelle 51 erfolgt. So weist die Nebenwelle 51 zwei voneinander getrennte Nebenwellenabschnitte 51a, 51b auf, die miteinander koppelbar sind und in unterschiedlichen Über- bzw. Untersetzungsverhältnissen von der Vorschaltgruppe 41 einkoppelbar sind.

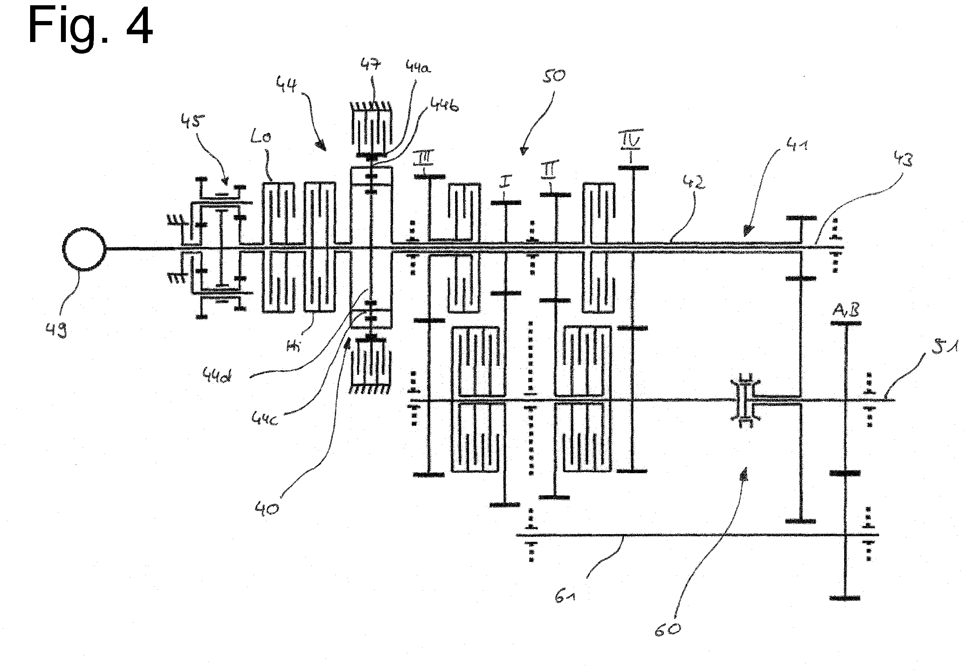

Die Figur 4 entspricht im Wesentlichen dem Schaltprinzip der Figur 3, wobei die Kupplung für die Nachschaltgruppe 60 nicht in Form einer Lamellenkupplung, wie es bei den Ausgestaltungformen der Figur 2 und Figur 3 der Fall war, sondern in Form einer Kegelkupplung realisiert ist.

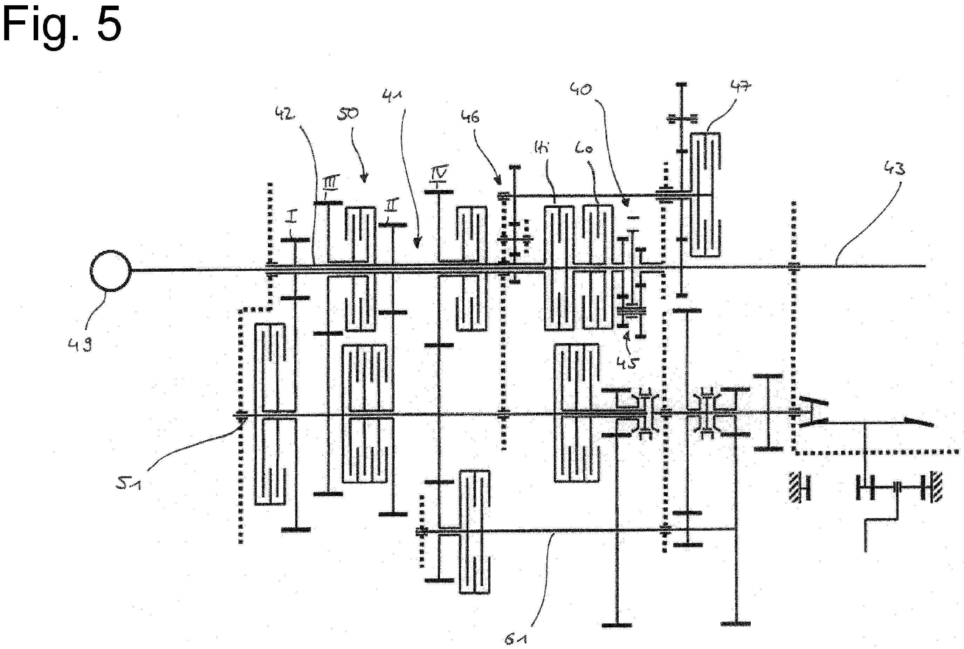

Die Ausgestaltungform der Figur 5 entspricht im Wesentlichen dem Schaltprinzip der Figuren 2 bis 4, wobei allerdings nunmehr das Vorgelege 40 keine Planetengetriebestufe 44 aufweist. Vielmehr erfolgt eine Koppelung der Innenwelle 43 mit der Außenwelle 42 entweder unmittelbar über die Kupplung Hi oder mittelbar über die Vorlegezahnradpaare 45, sofern die Kupplung Lo betätigt ist. Die Umkehrung der Drehrichtung der Außenwelle 42 wird über die Kupplung 47 und insgesamt drei in Serie geschaltete Zahnräder 46 realisiert.

## Patentansprüche

1. Lastschaltgetriebe für eine Landmaschine mit einem Getriebegehäuse, einer Eingangswelleneinheit (41) und einer Ausgangswelle (61),
wobei sich die Eingangswelleneinheit (41) und die Ausgangswelle (61) zumindest abschnittsweise innerhalb des Gehäuses erstrecken,
wobei eine Nebenwelle (51) parallel versetzt zwischen der Eingangswelleneinheit (41) und der Ausgangswelle (61) innerhalb des Gehäuses angeordnet ist,
wobei die Eingangswelleneinheit (41) und die Nebenwelle (51) über eine Vorschaltgruppe (50) und die Nebenwelle (51) und die Ausgangswelle (61) über eine Nachschaltgruppe (60) miteinander in Verbindung stehen,
wobei jede Schaltgruppe (50,60) einzeln zu- oder abkoppelbare Zahnradpaare aufweist, und
wobei die Eingangswelleneinheit (41) eine Außenwelle (42) und eine koaxial in der Außenwelle (42) angeordnete und gegenüber der Außenwelle (42) verdrehbare Innenwelle (43) aufweist und die Innenwelle (43) und die Außenwelle (42) über ein Vorgelege (40) miteinander in Verbindung stehen.

2. Lastschaltgetriebe nach Anspruch 1, wobei das Vorgelege (40) zumindest einen ersten und einen zweiten Schaltzustand aufweist.

3. Lastschaltgetriebe nach Anspruch 1 oder 2, wobei das Vorgelege (40) zumindest eine Planetengetriebestufe (44) mit zumindest einem Sonnenrad (44d), einem Hohlrad, (44a) sowie einer Planetengruppe, bestehend aus zumindest einem ersten und zumindest einem zweiten Planetenrad (44b, 44c), aufweist, wobei das zumindest eine erste Planetenrad (44c) zwischen dem Sonnenrad (44d) und dem zumindest einen zweiten Planetenrad (44b) und das zumindest eine zweite Planentenrad (44b) zwischen dem zumindest einen ersten Planetenrad (44c) und dem Hohlrad (44d) angeordnet ist, wobei das Sonnenrad (44d) unmittelbar an die Innenwelle (43) der Eingangswelleneinheit (41) gekoppelt ist.

4. Lastschaltgetriebe nach Anspruch 3, wobei die Planetengruppe mit der Außenwelle (42) der Eingangswelleneinheit (41) gekoppelt ist.

5. Lastschaltgetriebe nach Anspruch 3 oder 4, wobei in einem ersten Schaltzustand des Vorgeleges (40) die Innenwelle (43) der Eingangseinheit (41) unmittelbar mit der Planetengruppe gekoppelt ist.

6. Lastschaltgetriebe nach Anspruch 5, wobei in einem zweiten Schaltzustand des Vorgeleges (40) die Innenwelle (43) der Eingangswelleneinheit (41) über zumindest ein Vorgelegezahnradpaar (45) mit der Planetengruppe gekoppelt ist.

7. Lastschaltgetriebe nach einem der Ansprüche 2 bis 5, wobei die Drehrichtung der Ausgangswelle (42) derart umgekehrt werden kann, dass in einem dritten Schaltzustand des Vorgeleges (40) das Hohlrad (44a) gegenüber einer Drehung fixiert wird.

8. Lastschaltgetriebe nach Anspruch 1 oder 2, wobei das Vorgelege (40) zumindest ein erstes und ein zweites Vorgelegezahnradpaar (45) aufweist, wobei in einem ersten Schaltzustand die Innenwelle (43) der Eingangseinheit (41) unmittelbar und/oder in einem zweiten Schaltzustand über das erste und das zweite Vorgelegezahnradpaar (45) mit der Außenwelle (42) der Eingangseinheit (41) gekoppelt ist.

9. Lastschaltgetriebe nach Anspruch 7, wobei die die Drehrichtung der Ausgangswelle (42) derart umgekehrt werden kann, dass in einem dritten Schaltzustand des Vorgeleges (40) die Innenwelle (43) der Eingangswelleneinheit (41) mit der Außenwelle (42) der Eingangswelleneinheit (41) über drei in Serie miteinander in Verbindung stehende Zahnräder (46) gekoppelt ist.

10. Lastschaltgetriebe nach einem der Ansprüche 1 bis 8, wobei Antriebszahnräder der Vorschaltgruppe (50) auf der Außenwelle (42) der Eingangswelleneinheit (41) und Abtriebszahnräder der Vorschaltgruppe (50) auf der Nebenwelle (51) angeordnet sind.

11. Lastschaltgetriebe nach einem der Ansprüche 1 bis 9, wobei Antriebszahnräder der Nachschaltgruppe (60) auf der Nebenwelle (51) und Abtriebszahnräder der Nachschaltgruppe (60) auf der Ausgangswelle (61) angeordnet sind.

12. Lastschaltgetriebe nach Anspruch 9 oder 10, wobei ein Abtriebszahnrad (54) der Vorschaltgruppe (50) auf der Ausgangswelle (61) angeordnet und über ein Zwischenzahnrad (53) auf der Nebenwelle (51) mit einem Antriebszahnrad (52) auf der Außenwelle (42) der Eingangswelleneinheit (41) in Verbindung steht.

13. Lastschaltgetriebe nach einem der Ansprüche 1 bis 11, wobei die Zahnradpaare der Vor- und der Nachschaltgruppe (50,60) über eine separat zugeordnete Kupplung zu-und abkoppelbar sind.
